# EUROPEAN PATENT APPLICATION

(11) **EP 2 677 380 A1**
(43) Date of publication of application: **25.12.2013**
(21) Application number: 12172859.6
(22) Date of filing: 21.06.2012
(51) Int. Cl.: G05B 19/418

(54) **Method for controlling a manufacturing execution system (MES)**

(71) Applicant: Siemens Aktiengesellschaft, 80333 München (DE)
(72) Inventor: Boero, Andrea, 16147 Genova (IT); Selvaggio, Ignazio, 16132 Genova (IT)
(74) Representative: Fischer, Michael

(57) **Abstract**

The invention discloses a method for controlling a Manufacturing Execution System (MES) wherein one or more parameters of a predetermined manufacturing process executed in a production chain may deviate from a predetermined range, comprising the steps of: -storing in a controller module of the MES predetermined ranges associated to corresponding parameters to be controlled; -detecting parameter values in the manufacturing process and a deviation of their value outside the corresponding predetermined range; wherein said controller is programmed to prosecute the manufacturing process in the chain if no deviation is detected or to prosecute the manufacturing process in one or more secondary chains, if said deviation is detected and wherein the controller is programmed to instantiate a deviation object for each parameter to be controlled, the deviation object comprising a state machine implementing said prosecution in the secondary chains, a transition state in the state machine being triggered from signatures of persons involved in controlling said deviations which are stored in the deviation object with a corresponding documentation of the deviation. The invention also discloses a controlled for controlling a Manufacturing Execution System (MES).

## Description

### Field of application

The present invention relates to a method for controlling a Manufacturing Execution System (MES) wherein one or more parameters of a manufacturing process may deviate from a predetermined range.

More particularly, the invention relates to a method of the type described above wherein the Manufacturing Execution System is implemented for producing pharmacological products and wherein the deviation of parameters during the manufacturing process of said products must be controlled to ascertain the conformity to a quality standard of the resulting pharmacological products or to identify where and why a production chain in the MES is involved by said deviation, to improve or correct the MES.

The present invention further relates to a system for controlling a MES.

### Prior art

As known, a Manufacturing Execution System for producing a product comprises a controller module for checking parameters during the manufacturing process which ends in a final product. Especially in some fields, correct parameters in the manufacturing process are fundamental to guarantee the quality of the end products, for instance in the pharmacological sector where a drug or medicine may be put on the market only it the manufacturing process has been executed within the boundary of strict constrains, generally setting out in a specification or protocol, including ranges of values to be respected for parameters during the manufacturing process.

When a parameter deviates out of a predetermined range, some procedures are taken which may try to recover the process, if possible and if allowed from the specification, or terminating the process and discarding the product, otherwise.

The known methods for controlling the MES suffer for the limitation that the prosecution of the manufacturing process is implemented as a software program wherein codes associated to checks on the conformity of parameters are spread with codes implementing the production of the pharmacological product to be produced and thus the entire manufacturing process must be reprogrammed, for producing a different pharmacological product in the MES, i.e. a product which is compliant to different specifications and parameters and corresponding ranges.

For instance, the manufacturing process for producing product A in the MES may comprise step 1, step 2 and step 3 and the controller module is programmed to check possible deviation of a parameter in step 2 and to allow step 3 only if said parameter, for example temperature or time, is within a range; otherwise a step 4 is executed. The code implementing the controls is within the code implementing the execution of each step.

However, if the MES is reprogrammed for producing a product B, for example with steps 1001-1014, the code implementing the controls and its interactions with the MES, for example with steps 1-3, must be reprogrammed completely to check different deviations of different parameters, for example pressure and size.

In other words, the known method for controlling a MES are strictly customized on the client's product and cannot be adapted to support a manufacturing process of different products, at least without several changes to the code implementing the controls and to the same MES.

Another drawback is that, during the manufacturing process of a pharmacological product, it is required to produce a documentation which serves for certifying the product and currently there is no way to easily produce a documentation and more over a documentation signed from a responsible of the entire process or from more responsible of specific steps of the process. Automatically producing such a documentation, and more particularly a signed documentation, would be very useful because improves the manufacturing process time, since the signed documentation is mandatory for selling certified products. In this respect, currently, there is no way to adapt the MES for producing such documentation, when a manufacturing process for a different pharmacological products, is implemented.

The problem at the base of the present invention is how to implement a better method for controlling a Manufacturing execution system, especially in the pharmacological field, wherein the deviations of parameters to be controlled in the manufacturing process are easily checked and wherein the actions to be taken depending on such deviations, including the documentation to be produced, are easily managed and adapted depending on the product to be produced.

### Summary of the invention

The solution idea at the base of the present invention is to associate each parameter to be checked to an instance of an object in a controller module of a Manufacturing Execution System, the object including a state machine implementing the actions to be taken if the deviation occurs, wherein such actions include receiving signatures of persons responsible of the deviation management and the generation of documentation associated to the deviation.

Advantageously, when the MES is modified to produce a different product, according to a different manufacturing process which must be compliant with different specification parameter ranges, only the objects of the controller module are modified, in order to control the required parameters through the responsible and producing the relevant documentation. Thus, the method for controlling the MES is easily customizable.

Moreover, some deviation objects may be advantageously instantiated to implement a chain of the manufacturing process which is followed when the parameters are within the range or outside the range for a predetermined tolerance, and other deviation objects may be instantiated to implement one or more different chains, for example associated to parameters outside the ranges for more than the tolerance, and wherein different responsible are involved in the signatures of the different chains, of course ending in a completely different documentation and history of the resulting products.

According to this idea of solution, the technical problem is solved by a method for controlling a Manufacturing Execution System (MES) wherein one or more parameters of a manufacturing process executed in a production chain may deviate from a predetermined range, comprising the steps of:
- storing in a controller module of the MES predetermined ranges associated to corresponding parameters to be controlled;
- detecting parameter values in the manufacturing process and a deviation of their value outside the corresponding predetermined range;
wherein said controller module is programmed to prosecute the manufacturing process in the chain if no deviation is detected or to prosecute the manufacturing process in one or more secondary chains, if said deviation is detected and
wherein the controller module is programmed to instantiate a deviation object for each parameter to be controlled, the deviation object comprising a state machine implementing said prosecution in the secondary chains, a transition state in the state machine being triggered from signatures of persons involved in controlling said deviations which are stored in the deviation object with a corresponding documentation of the deviation.

Advantageously, the signatures may be implemented including in the MES devices for identification of responsible of each phase of the manufacturing process and the responsible may automatically sign the deviation and let the process prosecute in the main chain or redirecting the process towards the secondary chain, after checking the deviation; a documentation, associated to the specific deviation and to the responsible is automatically stored in the controlled module for certifying the product.

The above mentioned problem is also solved by a controller for a Manufacturing Execution System (MES) wherein one or more parameters of a manufacturing process executed in a production chain may deviate from a predetermined range, the controller comprising:
- a memory storing ranges associated to corresponding parameters to be controlled; an input interface receiving from detectors of the MES parameter values in the manufacturing process and a comparator processing a deviation of the parameter values outside the corresponding predetermined range;
- the controller being programmed to prosecute the manufacturing process in the chain if no deviation is detected or to prosecute the manufacturing process in one or more secondary chains, if said deviation is detected and to instantiate a deviation object for each parameter to be controlled, wherein the deviation object comprises a state machine implementing the prosecution in the secondary chains, a transition state in the state machine being triggered from signatures of persons involved in controlling said deviations which are stored in the deviation object with a corresponding documentation of the deviation. Preferably, the signatures are generated from devices identifying the responsible and connected to the controller. For instance, such devices are smart cards.

### Brief description of the drawings

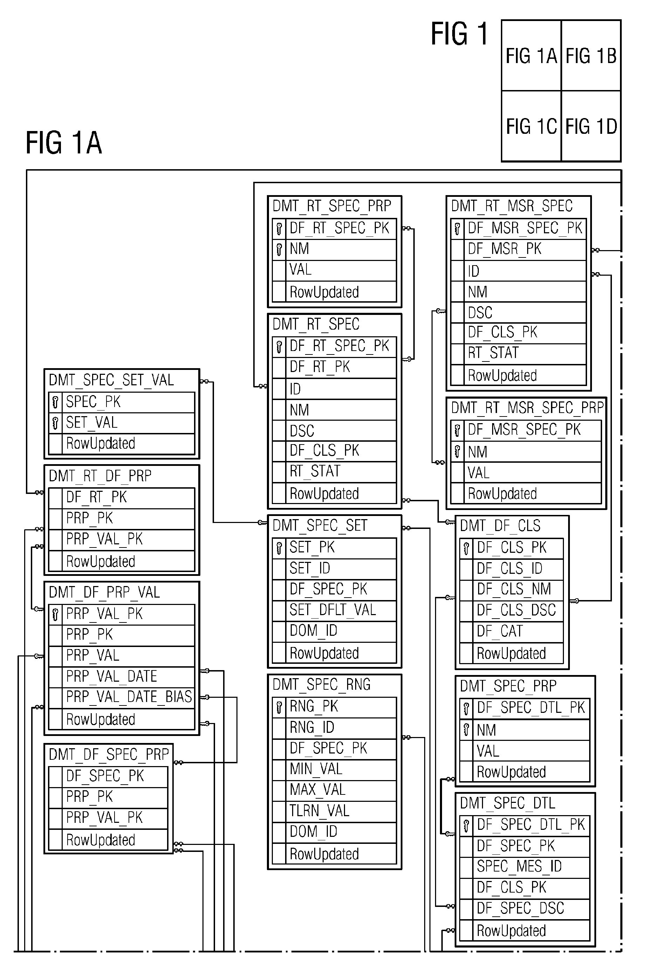

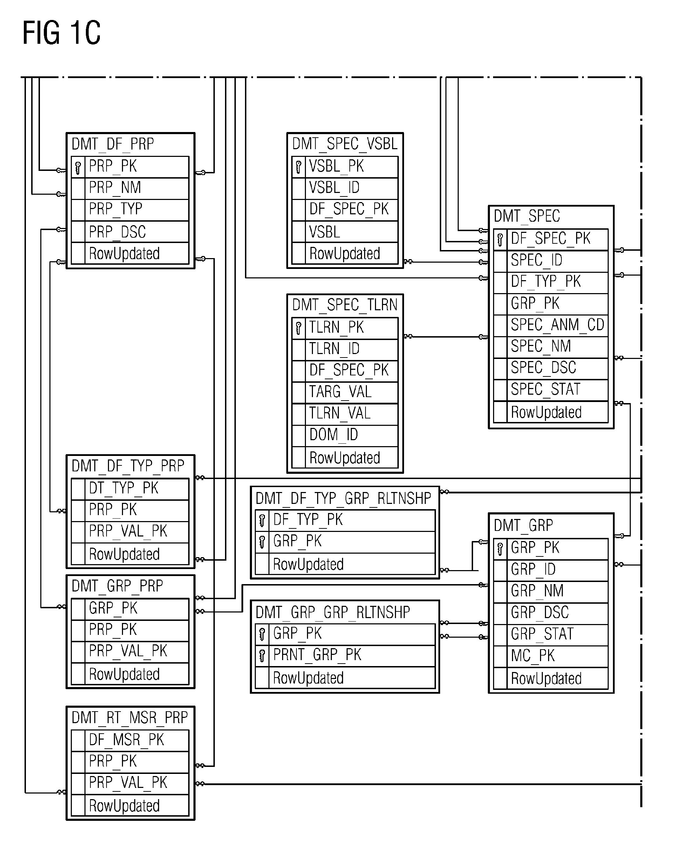

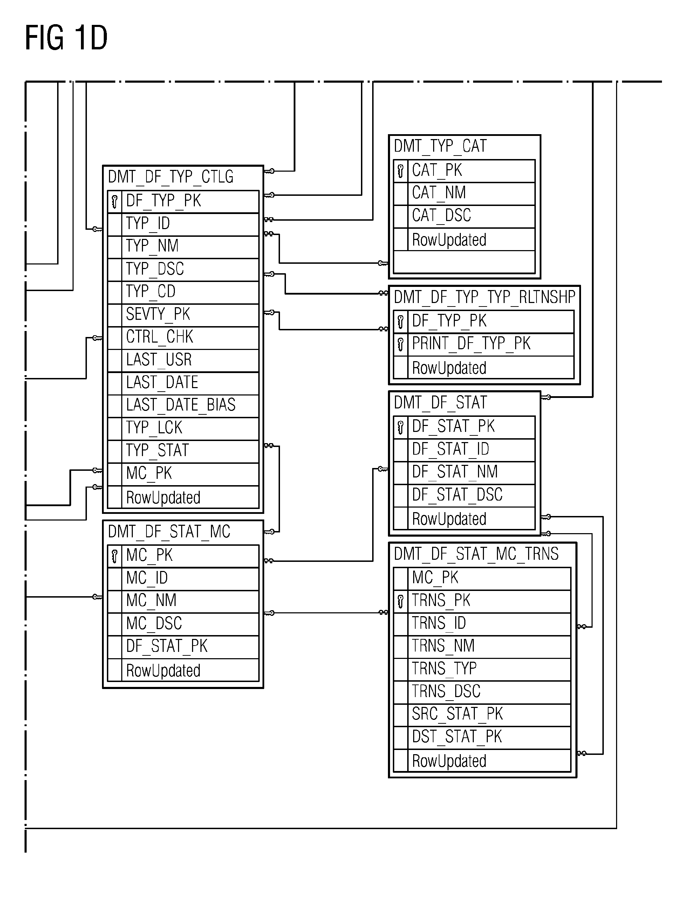

Figure 1a schematically represents a top portion of a schema implementing the controller module according to the present invention.

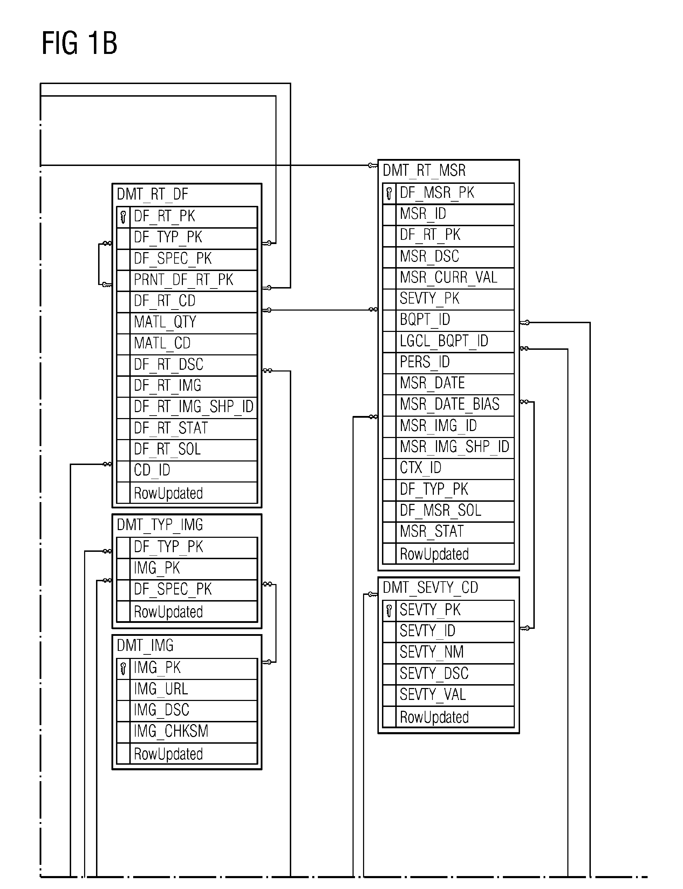

Figure 1b schematically represents a bottom portion of the schema of figure 1a.
Figure 2 schematically represent the controller module in a MES.

### Detailed description

According to the invention, an anomaly or a deviation that can occur in a production process of a Manufacturing Executing System (MES) is associated to a template which is stored in a controller module of the MES, also indicated as deviation type. More particularly, the anomaly is an occurrence of a deviation outside a predetermined range of a parameter of the production process, for example a temperature or a pressure of a substance or the time of mixing a certain solution in the manufacturing process of a pharmaceutical product.

The deviation type includes an identification number or code (Id) and a unique Code which is preferably associated to a default severity of the deviation. All deviation types which are stored in the controller module define a dictionary of all possible deviations that can happen during the manufacturing process of the product in the MES. Each deviation type is implemented as a class of a programming language which can be instantiated in an object, during run-time of the manufacturing process and through the controller module execution.

More particularly, each object implementing a deviation is associated to a state machine, including state changes or transition between states. Such transitions are associated to a signature path of the deviation, wherein the deviation is controlled by a responsible of a certain phase of the manufacturing process and wherein the responsible signs to have checked the deviation in said phase, to let the manufacturing process prosecuted forward. In this respect, the controller module stores in the object or instance associate to the deviation a history and/or documentation and/or report of the deviation. The history preferably includes the list of the states previously processed for the deviation or the list of responsible which operated on it. The documentation preferably includes the specification of values or range for certain parameters and the detected values for such parameters. The report preferably includes a table or list of the products produced under the same MES and the same manufacturing process.

According to another aspect of the invention, a Group is implemented as a hierarchical clustering, to logically collect different types of deviation, i.e. objects instantiated from different classes. Also the group is associated to identification (Id) and is preferably structured as a tree. Type to group ownership of objects, for example the responsibility on a certain deviation, can be configured at any level of group hierarchy and each deviation type can belong to more than one group. Advantageously, according to this aspect, the present invention allows to easily implement in an object who is the person responsible for managing the corresponding deviation, i.e. how to prosecuting the production process and what actions to be taken, and also allows to implemented ownership of more objects in the tree structure grouping the deviation, thus easily associating or more than one responsible to more than one deviation in the production process.

According to another aspect of the present invention, a deviation specification is implemented for providing a collection of additional information specific for single deviations types or groups. Also the Deviation Specification includes an identification (Id) and a unique Anomaly-Code. The additional information preferably includes three levels of deviations: out of range failure, beyond tolerance failure, out of foreseen set values failure and a criterion category that should be attended for disclosing deviations, i.e. deviation naked-eye visibility. For instance, if the predetermined range is a-b, with a>0, b>a always positive, and the tolerance is c, with c>b, an out of range failure is the value d, with d>c, a beyond tolerance failure is e, with b>e>c, and an out of foreseen failure is f, with f<0.

A deviation type specification represents a MES contextualization. According to this aspect of the invention, types are classified as deviation templates for a single production machine or for a single production line (equipment), of for a production line typology equipment class, or occurring on a particular material (material definition), or on a class of materials (material class) or for a production process (process segment). Advantageously, the control module may be associated to any Manufacturing Executing System, easily associating the deviation types, deviations groups and deviation specification to a machine, a production line, a production line typology equipment class, a material or a class of materials.

According to the invention, a set up phase for controlling the MES includes associating the controller module to the MES, i.e. to the MES machinery or material given above. After the set up phase, the control module is executed, i.e. a Runtime Deviation is provided as an instance of a template type or object which is the result of a deviation type identification on plant and of its mapping inside type templates catalogue. In an embodiment of the invention, type templates may be optionally contextualized inside MES environment but a Runtime Deviation is preferably always contextualized, i.e. associated to the MES, for instance linked to a production lot, a sub-lot, an order or an entry of the MES. Then, during the processing of the production lot, sub-lot, order or entry, and if a deviation occurs, type templates and objects may be contextualized.

According to another aspect of the invention, more than one association between the Runtime deviation and the MES may be defined. This MES association is called Runtime Deviation Specification.

According to another aspect of the invention, a signatures path in the production process, when a deviation is detected, is implemented with a Deviation Runtime Measurement which is a list of actions to be taken to certificate the deviation. Such actions are compliant to the protocol or specification of the product to be produced, for instance a pharmacological product; the actions taken and the corresponding signatures are saved in the documentation of the control module, automatically.

The Deviation Runtime Measurement comprises an Id, which is set as unique, if not specified, by default. Each measurement represents a step of a path of signatures, linked to different approval phases (automatically approved, validating, validated, approved... etc). These phases are configured inside a state machine that is linked or included in each deviation type or object. Thus, advantageously, for each deviation type a different approval or signature path is defined.

A state in the state machine implements a single step or action of an approval path and a transaction represents the link between two states, i.e. a possible step change. The State Machine includes all possible changes. It can be made up of just a starting state (this is the minimal state machine, that does not allow states changes) or enriched of one or more transactions. Each deviation type is associated to only one state machine and this association cannot be changed after the first deviation.

According to an aspect of the invention, the controlled module prosecute the manufacturing process in the chain or main chain of production in the MES if no deviation is detected or prosecute the manufacturing process in one or more secondary chains, if said deviation is detected; more particularly, the controller module instantiates a deviation object for each parameter to be controlled and the deviation object comprises the state machine implementing the prosecution in the secondary chains; the transition state in the state machine is for example triggered from signatures of a person or persons involved in controlling the deviations which are stored in the deviation object with a corresponding documentation of the deviation.

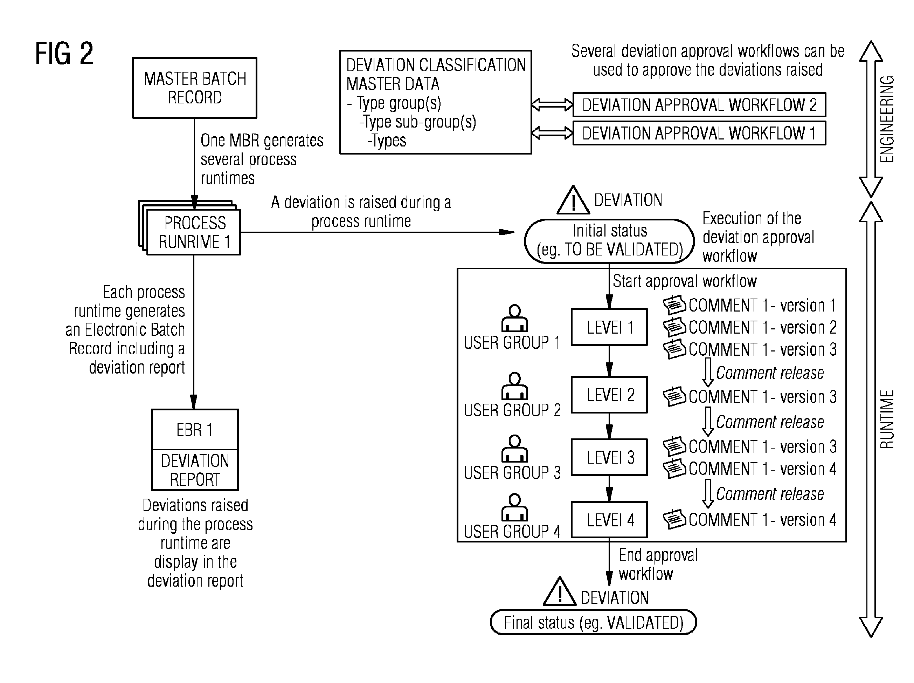

Figure 2 schematically represents how a deviation in a parameters of a production process in a MES is controlled and managed with the method of the invention.

In a set up phase, indicated with engineering, a deviation (deviation classification master data) is associated to type(s), group(s), sub-group(s) and to at least one deviation approval workflow. More particularly, the deviation is associated to an object and a state machine implementing the actions to be taken when the deviation occurs, including the signature path, is included or associated to the object. Then, a master batch records (MBRs), including manufacturing instructions for the MES is generated. Batch Records or EBR are derived from the MBR and relates to a specific order. Master batch records and batch records are therefore the basis for a precise and detailed description of pharmaceutical manufacturing processes. They contain all pharmaceutically relevant data: the input material list, detailed work instructions to be applied in production, and also process data, or process steps, such as in-process controls, Critical Process Parameters and Critical Quality Attributes.

According to the invention, the advantages are flexibility in changing the control of a MES, when a different product is produced, and a unified model, adapt to easily interface the MES for checking and managing deviations occurrence and for producing documentation according to the final product and its history during the manufacturing process. The method advantageously allows to user to quickly investigate inside deviations catalogue which included all possible deviation templates, through group ownership. Filters to search deviation in the MES and search query to identify the reason of non-conformity are included in the control modules. For example, such searches are implemented with links to the attributes of the objects implementing the deviations or the documentation automatically produced during the manufacturing process.

It allows dynamic link to MES entities but all updating are historicized, keeping so trace of previous values. This joins together flexibility and strictness in tracing approval paths.

## Claims

1. Method for controlling a Manufacturing Execution System (MES) wherein one or more parameters of a predetermined manufacturing process executed in a production chain may deviate from a predetermined range, comprising the steps of:
- storing in a controller module of the MES predetermined ranges associated to corresponding parameters to be controlled;
- detecting parameter values in the manufacturing process and a deviation of their value outside the corresponding predetermined range;
wherein said controller is programmed to prosecute the manufacturing process in the chain if no deviation is detected or to prosecute the manufacturing process in one or more secondary chains, if said deviation is detected and
wherein the controller is programmed to instantiate a deviation object for each parameter to be controlled, the deviation object comprising a state machine implementing said prosecution in the secondary chains, a transition state in the state machine being triggered from signatures of persons involved in controlling said deviations which are stored in the deviation object with a corresponding documentation of the deviation.

2. Method according to claim 1 wherein each deviation is associated to a template or deviation type including an identification number or code, preferably associated to a default severity of the deviation, wherein all the deviation types define a dictionary of deviations that can occur during the manufacturing process.

3. Method according to claim 2 wherein the controller module stores in the object or instance associated to the deviation a history and/or documentation and/or a report of the deviation.

4. Method according to claim 3 wherein the history preferably includes the list of the states processed for the deviation previous to the deviation occurrence or the list of responsible which operated on the deviation, the documentation preferably includes the specification of values or ranges for certain parameters and the detected values for such parameters and the report preferably includes a table or list of the products produced under a same MES and a same manufacturing process.

5. Method according to claim 4 further supporting filters for searching deviation in the MES and search queries for identifying the reason of non-conformity, such searches being preferably implemented with links to the attributes of the objects implementing the deviations or the documentation automatically produced during the manufacturing process.

6. Method according to claim 5 wherein each deviation is associated to a group which logically collects different types of deviations, each group being associated to identification (Id) and preferably structured as a tree.

7. Manufacturing Execution System (MES) wherein one or more parameters of a manufacturing process executed in a production chain may deviate from a predetermined range, the controller comprising:
- a memory storing ranges associated to corresponding parameters to be controlled; an input interface receiving from detectors of the MES parameter values in the manufacturing process and a comparator processing a deviation of the parameter values outside the corresponding predetermined range;
- the controller being programmed to prosecute the manufacturing process in the chain if no deviation is detected or to prosecute the manufacturing process in one or more secondary chains, if said deviation is detected and to instantiate a deviation object for each parameter to be controlled, wherein the deviation object comprises a state machine implementing the prosecution in the secondary chains, a transition state in the state machine being triggered from signatures of persons involved in controlling said deviations which are stored in the deviation object with a corresponding documentation of the deviation.
